# EUROPÄISCHE PATENTSCHRIFT

(11) **EP 3 549 834 B1**
(45) Veröffentlichungstag und Bekanntmachung des Hinweises auf die Patenterteilung: **27.07.2022**
(21) Anmeldenummer: 19164098.6
(22) Anmeldetag: 20.03.2019
(51) Int. Cl.: B60T 7/02, F01L 1/18, F01L 1/24

(54) **MOTORBREMSE FÜR EINE BRENNKRAFTMASCHINE**
ENGINE BRAKE FOR AN INTERNAL COMBUSTION VEHICLE
FREIN MOTEUR POUR UN VEHICULE A` COMBUSTION INTERNE

(30) Priorität: 31.03.2018 DE 102018002671
(43) Veröffentlichungstag der Anmeldung: 09.10.2019
(73) Patentinhaber: ZF CV Systems Europe BV, 1170 Brussels (BE)
(72) Erfinder: WYSOCKI, Pawel, 53-025 Wroclaw (PL)
(74) Vertreter: Copi, Joachim

(56) Entgegenhaltungen:
- EP-A1- 2 295 738
- WO-A1-2005/075795
- WO-A1-2009/038935
- DE-A1- 1 919 993
- DE-A1-102014 205 813
- DE-A1-102016 210 401
- US-A- 4 598 674
- US-A1- 2012 260 874

## Beschreibung

Die Erfindung betrifft eine Motorbremse für eine Brennkraftmaschine, welche ein Betätigungshebel aufweist, wobei die Motorbremse, weist auch ein Steuerventil mit einem Steuerschieber, und eine Vorrichtung zum Verbinden des Betätigungshebel mit dem Steuerschieber des Steuerventils, bei welcher der Betätigungshebel als Schwenkhebel ausgebildet und mittels eines federelastischen Kupplungselements mit dem Steuerschieber verbunden ist.

Eine derartige Verbindungsvorrichtung wird in einer bekannten Motorbremsanlage eines Lastkraftwagens genutzt. Das Kupplungselement besteht hierbei aus einem U-förmig gebogenen Blech, dessen erster Schenkel einseitig offen geschlitzt ist. In diesem Schlitz ist ein Abschnitt des steuerventilnahen Endes eines Betätigungshebels aufgenommen. Außerdem übergreift das Kupplungselement einen durch eine Bohrung im steuerventilnahen Ende des Betätigungshebels gesteckten Stift beidseitig. Der zweite Schenkel des Kupplungselements ist ebenfalls einseitig offen geschlitzt ausgebildet. Er greift zur Verbindung des Betätigungshebels mit einem Steuerschieber eines Steuerventils rastend in eine Ringnut ein, welche an dem freien, betätigungshebelnahen Ende eines Steuerschiebers des Steuerventils ausgebildet ist. Diese Verbindungsvorrichtung wird als verbesserungswürdig beurteilt.

WO 2009/038935 offenbart eine Vorrichtung zur Nutzung in dem modularen Ventiltrieb des Verbrennungsmotors. Die genannte Vorrichtung weist einen Draht auf, der aus Stahl besteht.

Vor diesem Hintergrund liegt der Erfindung die Aufgabe zugrunde, eine robustere, langlebige und kostengünstig herstellbare gattungsgemäße Verbindungsvorrichtung vorzustellen.

Diese Aufgabe wird durch eine Vorrichtung mit den Merkmalen des Anspruchs 1 gelöst. Vorteilhafte Weiterbildungen sind in den abhängigen Ansprüchen genannt.

Demnach geht die Erfindung aus von einer Vorrichtung zum Verbinden eines Betätigungshebels mit einem Steuerschieber eines Steuerventils, bei welcher der Betätigungshebel als Schwenkhebel ausgebildet und mittels eines federelastischen Kupplungselements mit dem Steuerschieber verbunden ist. Zur Lösung der gestellten Aufgabe ist vorgesehen, dass das Kupplungselement zwei parallel zueinander ausgerichtete Schenkel sowie einen die beiden Schenkel verbindenden Abschnitt aufweist, und dass der erste Schenkel des Kupplungselements am freien Ende des Steuerschiebers schwenkbar gelagert sowie der zweite Schenkel mit dem freien Ende des Betätigungshebels verrastbar ist; ferner besteht das Kupplungselement aus einem Federstahl.

Diese Vorrichtung zum Verbinden eines Betätigungshebels mit einem Steuerschieber eines Steuerventils ist sehr kostengünstig herstellbar sowie schnell und leicht montierbar, da diese lediglich das genannte Kupplungselement benötigt. Bei einer ausreichend starken Dimensionierung des Kupplungselements hält dieses den Betätigungskräften des Betätigungshebels problemlos stand.

Gemäß einer ersten Weiterbildung dieser Verbindungsvorrichtung ist vorgesehen, dass der erste Schenkel des Kupplungselements in einer Bohrung im freien Ende des Steuerschiebers aufgenommen und dort schwenkbar gelagert ist. Durch diese schwenkbare Aufnahme des ersten Schenkels in der genannten Bohrung ist das Kupplungselement mittels einer Schwenkbewegung leicht auf das freie, steuerschiebernahe Ende des Betätigungshebels aufschiebbar. Eine schwenkbare Aufnahme des Kupplungselements in der erwähnten Bohrung des Steuerschiebers kann dadurch erleichtert sein, indem das Kupplungselement als Draht mit rundem Querschnitt ausgebildet ist.

Weiter kann vorgesehen sein, dass der zweite Schenkel des Kupplungselements in einer Rastnut am steuerschiebernahen Ende des Betätigungshebels verrastbar ist. Die Verrastung ist vergleichsweise einfach sowie schnell durchführbar und benötig keine weiteren Sicherungsmittel. Durch die Ausbildung einer Rastnut mit ausreichender, jedoch vergleichsweise geringer Tiefe wird das freie Ende des Betätigungshebels nicht geschwächt und kann auch bei längerer Nutzungsdauer standhalten. Ähnliches gilt für die Anordnung des ersten Schenkels in einer Bohrung im freien Ende des Steuerschiebers, da der Steuerschieber aus konstruktiven Gründen einen verhältnismäßig großen Durchmesser aufweist und somit durch die quer durch das freie Ende des Steuerschiebers verlaufende Bohrung nicht geschwächt wird.

Bei einer Herstellung des Kupplungselements aus einem Federdraht lässt sich dieses derartig dimensionieren, dass bei einer Montage zuerst der erste Schenkel des Kupplungselements in die Bohrung im freien Ende des Steuerschiebers eingeführt wird, und dann der zweite Schenkel des Kupplungselements soweit in Richtung zum Betätigungshebel verschwenkt wird, bis der zweite Schenkel des Kupplungselements in geringem Maße elastisch in die Rastnut am freien Ende des Betätigungshebels einrastet, ohne dass dabei eine bleibende Verformung des Kupplungselements eintritt.

Nach dem Einrasten des Kupplungselements in die Rastnut des Betätigungshebels liegt das freie Ende des Betätigungshebels mit seiner steuerventilnahen Unterseite verspannt auf dem betätigungshebelnahen Ende des Steuerschiebers auf, so dass sich der Steuerschieber durch den Betätigungshebel spielfrei bewegen lässt.

Die Dimensionierung des Federdrahts ist vorzugsweise derart, dass sich beim Bewegen des Steuerschiebers durch den Betätigungshebel keine Verformung des Kupplungselements ergibt und somit auch während der Betätigung das freie Ende des Betätigungshebels mit seiner Unterseite mit Verspannung auf der Stirnseite des freien Endes des Steuerschiebers aufliegt.

Gemäß einer weiteren Ausführungsform kann vorgesehen sein, dass der erste Schenkel und der zweite Schenkel des Kupplungselements von einem diese Schenkel verbindenden Abschnitt in die gleiche Richtung abgebogen sind, und dass das Kupplungselement dadurch im Wesentlichen C-förmig ausgebildet ist. Um in diesem Fall eine Verschiebesicherung in Längsrichtung der beiden Schenkel zu erhalten, kann das freie Ende des zweiten Schenkels, welches mit dem Betätigungshebel verrastet wird, eine im Wesentlichen rechtwinklige, im verrasteten Zustand hin zum Steuerventil weisende Abbiegung aufweisen, welche das freie Ende des Betätigungshebels übergreift.

Außerdem kann vorgesehen sein, dass im Bereich des freien Endes des ersten Schenkels des Kupplungselements eine Ringnut ausgebildet ist, welche einen Sicherungsring aufnehmen kann. Ein dort angeordneter Sicherungsring bewirkt, dass das Kupplungselement auch im nicht verrasteten Zustand verliersicher an dem Steuerschieber angeordnet bleibt.

Gemäß einer weiteren Ausführungsform kann vorgesehen sein, dass der erste Schenkel und der zweite Schenkel des Kupplungselements gegensinnig von dem sie verbindenden Abschnitt abgebogen sind, und dass das Kupplungselement dadurch im Wesentlichen Z-förmig ausgebildet ist. Bei dieser Bauvariante ist eine Verschiebesicherung gemäß der ersten Ausführungsform unnötig, jedoch liegt dann das freie Ende des Betätigungshebels mit seiner Unterseite nicht auf dem freien Ende des Steuerschiebers auf. Es liegt vielmehr an dem schräg verlaufenden Abschnitt an und gewährleistet auf diese Weise eine spielfreie sowie vorgespannte Verbindung zwischen dem Betätigungshebel und dem Steuerschieber.

Erfindungsgemäß besteht das Kupplungselement aus einem Federstahl, welcher eine lange Gebrauchsdauer bei geringen Herstellkosten gewährleistet. Erfindungsgemäß ist das Steuerventil zum Ansteuern einer Motorbremse einer Brennkraftmaschine ausgebildet.

Die Erfindung wird nachstehend anhand zweier in der Zeichnung dargestellter Ausführungsbeispiele weiter erläutert. In der Zeichnung zeigt
Fig. 1 eine Seitenansicht eines Betätigungshebels, welcher mit einem Steuerventil zum Ansteuern einer Motorbremse verbunden ist,
Fig. 2 eine Draufsicht auf den Betätigungshebel und das Steuerventil gemäß Fig. 1,
Fig. 3 eine Ausführungsform eines C-förmigen Kupplungselements, und
Fig. 4 eine Ausführungsform eines Z-förmigen Betätigungselements.

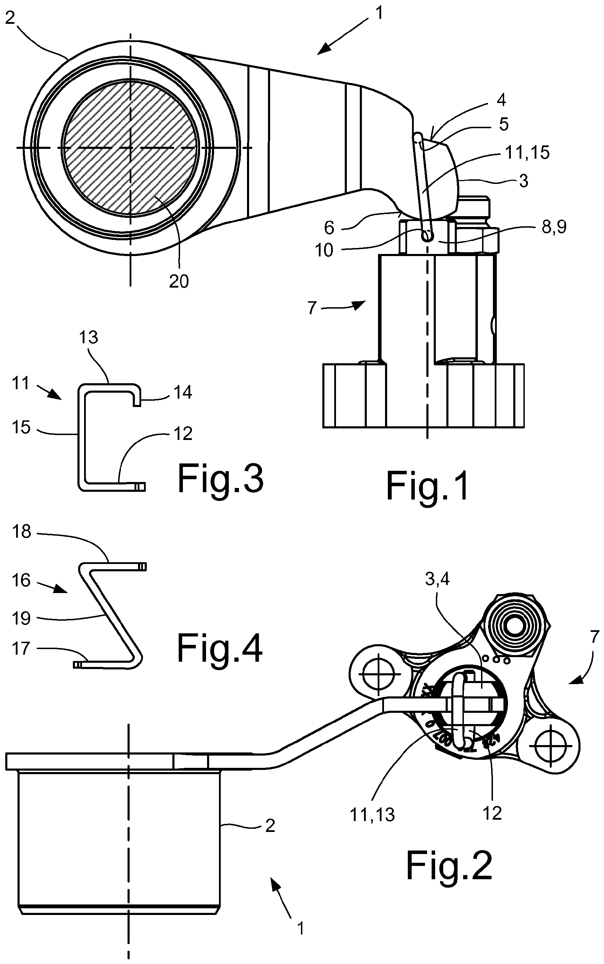

Der in den Figuren 1 und 2 gezeigte Betätigungshebel 1 dient zur Betätigung eines Steuerventils 7, mit dem eine Motorbremse einer Brennkraftmaschine aktivierbar oder deaktivierbar ist. Der Betätigungshebel 1 weist ein Lagerauge 2 auf, welches eine Welle 20 zum Schwenken des Betätigungshebels 1 drehfest aufnimmt. Das steuerventilnahe Ende 3 des Betätigungshebels 1 weist an seiner Oberseite 4 eine Rastnut 5 auf. Außerdem liegt dieses steuerventilnahe Ende 3 mit seiner Unterseite 6 auf dem betätigungshebelnahen Ende 9 eines Steuerschiebers 8 auf, welcher in dem Steuerventil 7 axial verschiebbar aufgenommen ist. Durch unterschiedliche axiale Positionierung des Steuerschiebers 8 in dem Steuerventil 7 ist die Motorbremse der Brennkraftmaschine ein- und ausschaltbar.

Fig. 2 zeigt eine Draufsicht auf die Anordnung von Betätigungshebel 1 und Steuerventil 7 gemäß Fig. 1. In beiden Figuren 1 und 2 ist erkennbar, dass der Betätigungshebel 1 und das Steuerventil 7 mittels eines federelastischen Kupplungselements 11 miteinander verbunden sind. Dieses in Fig. 3 in einer Seitenansicht gezeigte Kupplungselements 11 hat eine im Wesentlichen C-förmige Geometrie, mit einem ersten Schenkel 12 und einem zweiten Schenkel 13, die gleichsinnig im Wesentlichen rechtwinklig zu einem diese verbindenden Abschnitt 15 verlaufen. Wie die Figuren 1 und 2 zeigen, ist der erste Schenkel 12 dieses federelastischen Kupplungselements 11 in eine senkrecht zur Längsachse des Steuerschiebers 8 ausgerichtete Bohrung 10 am betätigungshebelnahen Ende 9 des Steuerschiebers 8 eingesteckt, und der zweite Schenkel 13 ist in die Rastnut 5 an der Oberseite 4 des Betätigungshebels 1 eingerastet.

Am C-förmigen Kupplungselement 11 ist eine Verschiebesicherung dadurch ausgebildet, dass das freie Ende seines zweiten Schenkels 13 eine rechtwinklig in Richtung zum ersten Schenkels 12 verlaufende Abbiegung 14 aufweist, die das freie Ende 3 des Betätigungshebels 1 übergreift. Hierdurch ist ein seitliches Verschieben des C-förmigen Kupplungselements 11 auf dem Betätigungshebel 1 nicht möglich.

Das in den Figuren 1 bis 3 gezeigte Kupplungselement 11 aus Federstahldraht ist so bemessen und ausgebildet, dass es sich ohne bleibende Verformung über das steuerventilnahe Ende 3 des Betätigungshebels 1 zum Einrasten in dessen Rastnut 5 aufschieben lässt. Nach dieser Verrastung liegt die steuerventilnahe Unterseite 6 des Betätigungshebels 1 an der Stirnseite des betätigungshebelnahen Endes 9 des Steuerschiebers 8 vorgespannt an. Diese Vorspannung wird auch nicht durch eine Betätigung des Betätigungshebels 1 aufgehoben, so dass der Betätigungshebel 1 mit dem Steuerschieber 8 ständig spielfrei gekoppelt ist.

Während Fig. 3 eine Seitenansicht des im Wesentlichen C-förmigen federelastischen Kupplungselements 11 zeigt, ist in Fig. 4 alternativ dazu ein Z-förmiges federelastisches Kupplungselement 16 dargestellt. Dessen erster Schenkel 17 und dessen dazu beabstandeter zweiter Schenkel 18 sind in entgegengesetzte Richtungen schräg von einem diese verbindenden Abschnitt 19 abgebogen. Bei einer Montage wird der erste Schenkel 17, wie bereits beschrieben, in die Bohrung 10 im betätigungshebelnahen Ende 9 des Steuerschiebers 8 eingeführt, und anschließend wird der zweite Schenkel 18 in gleicher Weise wie bezüglich der Figuren 1 bis 3 beschrieben, zum Betätigungshebel 1 hochgeschwenkt und in dessen Rastnut 5 eingerastet. Bei dieser Bauform liegt die Unterseite 6 des steuerventilnahen Endes 3 des Betätigungshebels 1 nicht auf dem freien betätigungshebelnahen Ende 9 des Steuerschiebers 8 auf, sondern sie liegt am schräg verlaufenden, den ersten Schenkel 17 und den zweiten Schenkel 18 verbindenden Abschnitt 19 an. Hierdurch ist ebenfalls eine spielfreie Verbindung zwischen dem Betätigungshebel 1 und dem Steuerschieber 8 gegeben.

### Bezugszeichenliste (Bestandteil der Beschreibung)

- 1: Betätigungshebel
- 2: Lagerauge am Betätigungshebel
- 3: Freies Ende des Betätigungshebels
- 4: Oberseite des freien Endes des Betätigungshebels
- 5: Rastnut an der Oberseite des Betätigungshebels
- 6: Unterseite des freien Endes des Betätigungshebels
- 7: Steuerventil
- 8: Steuerschieber
- 9: Freies Ende des Steuerschiebers
- 10: Bohrung im freien Ende des Steuerschiebers
- 11: C-förmiges Kupplungselement
- 12: Erster Schenkel des Kupplungselements 11
- 13: Zweiter Schenkel des Kupplungselements 11
- 14: Abbiegung am zweiten Schenkel 13
- 15: Abschnitt des C-förmigen Kupplungselements 11
- 16: Z-förmiges Kupplungselement
- 17: Erster Schenkel des Kupplungselements 16
- 18: Zweiter Schenkel des Kupplungselements 16
- 19: Schräger Abschnitt des Kupplungselements 16
- 20: Welle

## Patentansprüche

1. Eine Motorbremse für eine Brennkraftmaschine, welche ein Betätigungshebel (1) aufweist, wobei die Motorbremse weist auch ein Steuerventil (8) mit einem Steuerschieber (8), und eine Vorrichtung zum Verbinden des Betätigungshebels (1) mit dem Steuerschieber (8) des Steuerventils (7) auf, bei welcher der Betätigungshebel (1) als Schwenkhebel ausgebildet und mittels eines federelastischen Kupplungselements (11; 16) mit dem Steuerschieber (8) verbunden ist, **dadurch gekennzeichnet, dass** das Kupplungselement (11; 16) zwei parallel zueinander ausgerichtete Schenkel (12, 13; 17, 18) sowie einen die beiden Schenkel (12, 13; 17, 18) verbindenden Abschnitt (15; 19) aufweist, und dass der erste Schenkel (12; 17) des Kupplungselements (11; 16) am freien Ende (9) des Steuerschiebers (8) schwenkbar gelagert sowie der zweite Schenkel (13; 18) mit dem freien Ende (3) des Betätigungshebels (1) verrastbar ist, wobei das Kupplungselement (11; 16) aus einem Federstahl besteht.

2. Die Motorbremse nach Anspruch 1, **dadurch gekennzeichnet, dass** der erste Schenkel (12; 17) des Kupplungselements (11; 16) in einer Bohrung (10) im freien Ende (9) des Steuerschiebers (8) aufgenommen und dort schwenkbar gelagert ist.

3. Die Motorbremse nach Anspruch 1 oder 2, **dadurch gekennzeichnet, dass** der zweite Schenkel (13; 18) des Kupplungselements (11; 16) in einer Rastnut (5) am freien Ende (3) des Betätigungshebels (1) verrastbar ist.

4. Die Motorbremse nach Anspruch 3, **dadurch gekennzeichnet, dass** der zweite Schenkel (13; 18) des Kupplungselements (11; 16) in der Rastnut (5) an der steuerschieberfernen Oberseite (4) des freien Endes (3) des Betätigungshebels (1) verrastbar ist.

5. Die Motorbremse nach einem der Ansprüche 1 bis 4, **dadurch gekennzeichnet, dass** der erste Schenkel (12) und der zweite Schenkel (13) des Kupplungselements (11) von dem diese verbindenden Abschnitt (15) in die gleiche Richtung abgebogen sind, und dass das Kupplungselement (11) dadurch C-förmig ausgebildet ist.

6. Die Motorbremse nach Anspruch 5, **dadurch gekennzeichnet, dass** das freie Ende (3) des Betätigungshebels (1) mit seiner steuerschiebernahen Unterseite (6) im Zustand mit in die Rastnut (5) an der steuerschieberfernen Oberseite (4) des freien Endes (3) des Betätigungshebels (1) eingerasteten zweiten Schenkel (13) des Kupplungselements (11) mit Verspannung auf dem betätigungshebelnahen freien Ende (9) des Steuerschiebers (8) aufliegt.

7. Die Motorbremse nach einem der Ansprüche 1 bis 6, **dadurch gekennzeichnet, dass** das freie Ende des zweiten Schenkels (13) des Kupplungselements (11) eine rechtwinklig in Richtung des ersten Schenkels (12) verlaufende Abbiegung (14) aufweist, welche das freie Ende (3) des Betätigungshebels (1) übergreift und eine Verschiebesicherung bildet.

8. Die Motorbremse nach einem der Ansprüche 1 bis 4, **dadurch gekennzeichnet, dass** der erste Schenkel (17) und der zweite Schenkel (18) des Kupplungselements (16) gegensinnig von dem sie verbindenden Abschnitt (19) abgebogen sind, und dass das Kupplungselement (16) dadurch Z-förmig ausgebildet ist.

9. Die Motorbremse nach einem der Ansprüche 3, 4 und 6, wobei das genannte Kupplungselement aus Federstahldraht so bemessen und ausgebildet ist, dass es sich ohne bleibende Verformung über das steuerventilnahe Ende des Betätigungshebels (1) zum Einrasten in dessen Rastnut (5) aufschieben lässt.

## Claims

1. An engine brake for an internal combustion vehicle, which comprises an actuating lever (1), wherein the engine brake also comprises a control valve (8) with a control slide valve (8), and a device for connecting the actuating lever (1) to the control slide valve (8) of the control valve (7), in which the actuating lever (1) is configured as a pivot lever and is connected to the control slide valve (8) by means of a springloaded coupling element (11 ; 16), **characterized in that** the coupling element (11; 16) comprises two legs (12, 13; 17, 18) oriented parallel to each other as well as a segment (15; 19) connecting the two legs (12, 13; 17, 18), and that the first leg (12; 17) of the coupling element (11; 16) is pivoted on the free end (9) of the control slide valve (8) and the second leg (13; 18) can be locked with the free end (3) of the actuating lever (1), wherein the coupling element (11; 16) consists of a spring steel.

2. The engine brake according to claim 1, **characterized in that** the first leg (12; 17) of the coupling element (11; 16) is inserted into a bore (10) in the free end (9) of the control slide valve (8) and is pivoted there.

3. The engine brake according to claim 1 or 2, **characterized in that** the second leg (13; 18) of the coupling element (11; 16) can be locked in a locking groove (5) on the free end (3) of the actuating lever (1).

4. The engine brake according to claim 3, **characterized in that** the second leg (13; 18) of the coupling element (11; 16) can be locked in the locking groove (5) on the top side (4) of the free end (3) of the actuating lever (1) away from the control slide valve.

5. The engine brake according to any of claims 1 to 4, **characterized in that** the first leg (12) and the second leg (13) of the coupling element (11) are bent in the same direction from the segment (15) connecting these, and that the coupling element (11) as a consequence is formed C-shaped.

6. The engine brake according to claim 5, **characterized in that** the free end (3) of the actuating lever (1) with its underside (6) close to the control slide valve in the state with the second leg (13) of the coupling element (11) locked in the locking groove (5) on the top side (4) of the free end (3) of the actuating lever (1) away from the control slide valve rests with bracing on the free end (9) of the control slide valve (8) close to the actuating lever.

7. The engine brake according to any of claims 1 to 6, **characterized in that** the free end of the second legs (13) of the coupling element (11) comprises a bend (14) running at a right angle in the direction of the first legs (12), which engages the free end (3) of the actuating lever (1) and forms an anti-displacement locking device.

8. The engine brake according to any of claims 1 to 4, **characterized in that** the first leg (17) and the second leg (18) of the coupling element (16) are bent counterclockwise from the segment (19) connecting them, and that the coupling element (16) as a consequence is formed Z-shaped.

9. The engine brake according to any of claims 3, 4 and 6, wherein the mentioned coupling element made of spring steel is dimensioned and configured such that it can be slipped over the end of the actuating lever (1) close to the control valve without residual deformation to lock into place in its locking groove (5).

## Revendications

1. Frein-moteur pour un moteur à combustion interne, lequel présente un levier d'actionnement (1), dans lequel le frein-moteur présente également une soupape de commande (8) avec un tiroir de commande (8), et un dispositif pour relier le levier d'actionnement (1) au tiroir de commande (8) de la soupape de commande (7), pour lequel le levier d'actionnement (1) est réalisé sous la forme d'un levier pivotant et est relié au tiroir de commande (8) au moyen d'un élément d'accouplement (11 ; 16) élastique, **caractérisé en ce que** l'élément d'accouplement (11 ; 16) présente deux branches (12, 13 ; 17, 18) orientées parallèlement l'une à l'autre ainsi qu'une partie (15 ; 19) reliant les deux branches (12, 13 ; 17, 18), et que la première branche (12 ; 17) de l'élément d'accouplement (11 ; 16) est montée de manière pivotante sur l'extrémité libre (9) du tiroir de commande (8) et la deuxième branche (13 ; 18) peut être encliquetée avec l'extrémité libre (3) du levier d'actionnement (1), dans lequel l'élément d'accouplement (11 ; 16) est constitué d'un acier à ressort.

2. Frein-moteur selon la revendication 1, **caractérisé en ce que** la première branche (12 ; 17) de l'élément d'accouplement (11 ; 16) est reçue dans un trou (10) dans l'extrémité libre (9) du tiroir de commande (8) et y est montée pivotante.

3. Frein-moteur selon la revendication 1 ou 2, **caractérisé en ce que** la deuxième branche (13 ; 18) de l'élément d'accouplement (11 ; 16) peut être encliquetée dans une rainure d'encliquetage (5) sur l'extrémité libre (3) du levier d'actionnement (1).

4. Frein-moteur selon la revendication 3, **caractérisé en ce que** la deuxième branche (13 ; 18) de l'élément d'accouplement (11 ; 16) peut être encliquetée dans la rainure d'encliquetage (5) sur la face supérieure (4) de l'extrémité libre (3) du levier d'actionnement (1) éloignée du tiroir de commande.

5. Frein-moteur selon l'une quelconque des revendications 1 à 4, **caractérisé en ce que** la première branche (12) et la deuxième branche (13) de l'élément d'accouplement (11) sont courbées dans la même direction depuis la partie (15) reliant celles-ci, et que l'élément d'accouplement (11) est réalisé ainsi en forme de C.

6. Frein-moteur selon la revendication 5, **caractérisé en ce que** l'extrémité libre (3) du levier d'actionnement (1) avec sa face inférieure (6) proche du tiroir de commande dans l'état avec la deuxième branche (13) de l'élément d'accouplement (11) encliquetée dans la rainure d'encliquetage (5) sur la face supérieure (4) de l'extrémité libre (3) du levier d'actionnement (1) éloignée du tiroir de commande repose avec serrage sur l'extrémité libre (9) du tiroir de commande (8) proche du levier d'actionnement.

7. Frein-moteur selon l'une quelconque des revendications 1 à 6, **caractérisé en ce que** l'extrémité libre de la deuxième branche (13) de l'élément d'accouplement (11) présente une courbure (14) s'étendant à angle droit en direction de la première branche (12), laquelle enserre l'extrémité libre (3) du levier d'actionnement (1) par le dessus et forme une protection contre un déplacement.

8. Frein-moteur selon l'une quelconque des revendications 1 à 4, **caractérisé en ce que** la première branche (17) et la deuxième branche (18) de l'élément d'accouplement (16) sont courbées en sens inverse depuis la partie (19) les reliant, et que l'élément d'accouplement (16) est réalisé ainsi en forme de Z.

9. Frein-moteur selon l'une quelconque des revendications 3, 4 et 6, dans lequel ledit élément d'accouplement composé de fil d'acier à ressort est dimensionné et réalisé de sorte qu'il peut se glisser sans déformation durable au-dessus de l'extrémité du levier d'actionnement (1) proche de la soupape de commande pour s'encliqueter dans la rainure d'encliquetage (5) de celui-ci.
